# EUROPÄISCHE PATENTSCHRIFT

(11) **EP 4 372 037 B1**
(45) Veröffentlichungstag und Bekanntmachung des Hinweises auf die Patenterteilung: **25.03.2026**
(21) Anmeldenummer: 22207490.8
(22) Anmeldetag: 15.11.2022
(51) Int. Cl.: C08L 61/28, C08J 11/14, C08J 11/16

(54) **VERFAHREN ZUM RECYCLEN VON MELAMIN-FORMALDEHYD-HARZ AUS WÄHREND DER HERSTELLUNG UND VERARBEITUNG VON HOLZWERKSTOFFPLATTEN ANFALLENDEN ABFÄLLEN**
PROCESS FOR RECYCLING MELAMINE-FORMALDEHYDE RESIN FROM WASTE RESULTING FROM THE PRODUCTION AND PROCESSING OF WOODEN BOARDS
PROCÉDÉ DE RECYCLAGE DE RÉSINE MÉLAMINE-FORMALDÉHYDE À PARTIR DE DÉCHETS PRODUITS PENDANT LA FABRICATION ET LE TRAITEMENT DE PANNEAUX EN BOIS

(43) Veröffentlichungstag der Anmeldung: 22.05.2024
(73) Patentinhaber: Flooring Technologies Ltd., Kalkara SCM1001 (MT)
(72) Erfinder: Seidack, Georg, 16835 Herzberg (Mark) (DE); Kalwa, Norbert, 32805 Horn-Bad Meinberg (DE)
(74) Vertreter: Maikowski & Ninnemann Patentanwälte Partnerschaft mbB

(56) Entgegenhaltungen:
- CN-A- 111 675 827
- CN-A- 111 777 566
- CN-A- 111 825 626
- CN-B- 111 875 843
- US-A- 5 356 938
- US-A1- 2019 047 181

## Beschreibung

Die vorliegende Erfindung betrifft ein Verfahren zum Recyclen bzw. Aufschluss von Melamin-Formaldehyd-Harz aus während der Herstellung, Verarbeitung und Rücknahme von Holzwerkstoffplatten anfallenden Abfällen.

### Beschreibung

In allen industriellen Bereichen stellt immer häufiger die Frage, wie Reststoff oder Produkte nach Ablauf ihrer Nutzung recycelt werden können. Dieses Thema hat durch die Vorgaben der EU, die zukünftig für sämtliche Produkte eine Wiederverwendung/ein Recyclen vorschreibt, einen deutlichen Aktualitätsschub erhalten. Auch ist festzustellen, dass durch die stark gestiegenen Preise dieser Rohstoffe, Recycling immer interessanter wird. Zusätzlich haben sich die Entsorgungskosten für Reststoffe stark erhöht. Zudem tritt auch mehr und mehr der Aspekt in den Vordergrund, dass alle Produzenten möglichst ökologisch produzieren möchten. Dies bedeutet, dass die Rohstoffe effektiv genutzt werden sollen, Emissionen vermieden werden sollen, wenig Abfall entstehen soll.

Besonders für Produkte, in denen Ausgangsstoffe auf Basis von Öl oder Gas enthalten sind, sind diese Entwicklungen relevant. Es handelt sich bei diesen Produkten meist um Kunststoffe, die auch mengenmäßig relevant sind. Während das Recycling von thermoplastischen Kunststoffen (Polyethylen, Polypropylen, Polyvinylchlorid) bereits seit Jahrzehnten geübte Praxis ist, hat sich der Recyclinggedanke bei Duroplasten/Duromeren (Phenolharze, Melaminharze, Harnstoffharze usw.) noch nicht durchsetzen können.

Dies hat u. A. mit der schwierig aufzubrechenden vernetzten Struktur der Duroplasten/Duromeren zu tun, die als besonderer Vorteil dieser Produkte gesehen wird, da sie dadurch sehr widerstandsfähig gegenüber thermischen oder chemischen Angriff angesehen werden. Aber auch mit den in der Vergangenheit teilweise sehr niedrigen Preisen der Ausgangsstoffe.

Erste Ansätze für ein Recycling wurden für Harnstoff-Formaldehydleime erarbeitet, die u. A. als Leim bei Holzwerkstoffen eingesetzt werden. Diese Leime sind nach Aushärtung sehr empfindlich gegenüber dem Angriff von Feuchte/Wasser bei höheren Temperaturen. Hier kann durch eine Hydrolyse der Werkstoff (z.B. Spanplatte) aufgeschlossen werden. Der hydrolysierte Leim verbleibt im Wesentlichen in den resultierenden Spänen und dient bei einer erneuten Herstellung eines Holzwerkstoffes als Basis für die zugegeben Leime. Man muss allerdings konstatieren, dass es bei diesem Verfahren eher um das Zurückgewinnen der Holzmatrix geht als um eine Wiedergewinnung der Leimkomponenten.

Allerdings gab es auch in der Vergangenheit schon Aktivitäten, die zeigten, dass das Recycling von Duroplasten möglich sein sollte. In der DD 155779 wird beschrieben, wie durch ausgehärtete Melaminharze verschmutzte/verstopfte Produktionsanlagen gereinigt werden könnten. In der EP 0612 793 B1 und US 5,356,938 wird beschrieben, wie ausgehärtetes Melaminharz ( Fasern ) aufgeschlossen und einer Nutzung zugeführt werden kann. Allerdings wird dabei nur auf Reststoffe aus der Formkörper-/Faserherstellung und Rücknahmen dieser Produkte verwiesen. US 2019/0047181 A1 beschreibt die Aufarbeitung u.a. von mit Kohlenstofffasern verstärkten Polyimid, Polyurethan, Epoxyharz, Vinylester. CN 111 675 827, CN 111 777 566, CN 111 825 626 und CN 111 875 843 beschreiben Verfahren zur Wiedergewinnung von Melamin aus Geschirr hergestellt aus Melamin-Formaldehyd-Harz. Hierfür wird das Geschirr zunächst zerkleinert und anschließend mit einem wässrigen organischen Lösungsmittel und einem sauren Katalysator, wie HCl, HNO₃, H₂SO₄, AlCl₃ und ähnliche, bei Temperaturen zwischen 80-150°C behandelt. Die erheblichen Mengen an organischen Lösemitteln in Kombination mit Wasser, die diese Verfahren brauchen, machen sie unter ökologischen Aspekten eher ungünstig. Zudem befindet sich in der wässrigen Phase auch noch eine Säure, die ebenfalls problematisch ist.

Das Recyclen von duroplastischen Harzen aus Holzwerkstoffen, Imprägnaten oder Laminaten wird bisher allerdings nicht beschrieben. Bei der Produktion und Weiterverarbeitung von Holzwerkstoffen fallen auf vielen Stufen der Wertschöpfungskette melaminharzhaltige Abfälle an.

Im Falle der Herstellung und Weiterverarbeitung von Holzwerkstoffplatten zu Fußbodendielen oder Möbelteilen werden u.a. imprägnierte Dekorpapiere, Overlaypapiere und Gegenzugpapiere mit Holzwerkstoffplatten verpresst. Diese Papiere werden mit duroplastischen Harzen (Harnstoffharz, Melaminharz) in Imprägnieranlagen bzw. Imprägnierkanälen imprägniert. Beim Anfahren der Anlagen, beim Produktwechsel, bei Fehlbedienungen oder bei durch technische Gründe auftretende Änderungen der Produktionsparameter, fallen in großen Mengen qualitativ nicht einwandfreie Imprägnate an. Diese werden entsorgt (z.B. durch thermische Nutzung) und stellen je nach Auftragsgröße, Dauer der Störung usw. einen durchschnittlichen Verlust von 3 - 8 % dar. Da ein moderner Imprägnierkanal mit Geschwindigkeiten von 80 m/min und mehr betrieben wird, resultieren daraus mehrere Millionen Quadratmeter Ausschuss pro Jahr. Üblicherweise enthalten Imprägnate ca. 50 Gew% Harz, wodurch auch erhebliche Mengen an Harnstoff-/Melaminharz verloren gehen. Zusätzlich fallen in Imprägnierungen auch Ausschussmengen von Harzen durch Besäumung der Imprägnate und Staubbildung an. Auch diese Reste werden entsorgt. Auch fallen in der Imprägnierung Restharze an, die heute entsorgt werden und auch diese über das Jahr erhebliche Tonnagen darstellen können.

Bei der Weiterverarbeitung der Imprägnate z.B. durch Verpressen mit Holzwerkstoffplatten fallen an den Pressen durch Abkratzvorrichtungen, die Imprägnatüberstände an Platten entfernen, Abfälle an und auch überlagerte Imprägnate, die nicht mehr in der Produktion genutzt werden können, werden entsorgt. All diese Reststoffe oder Abfälle haben den Vorteil, dass die Melaminharze noch nicht vollständig ausgehärtet sind, sodass ein Recycling problemloser möglich sein könnte.

Auch bei der Herstellung der Holzwerkstoffplatten (wie Spanplatten, Faserplatten) kommen häufig hoch mit Melamin verstärkte Leime zur Anwendung. Für diese Platten gilt das Gleiche wie für die Imprägnate, dass auf allen Wertschöpfungsstufen Abfälle anfallen, die entsorgt werden müssen.

Die sich aus der bisherigen Praxis der Abfallentsorgung ergebenen Nachteile sind insbesondere hohe Materialverluste, hohe Entsorgungskosten und Abfallprobleme.

Wie bereits angedeutet, wird durch die EU ein stimmiges Recyclingkonzept für alle Produkte erwartet. Dies bedeutet für die Holzwerkstoffindustrie, dass auch für melaminhaltige Produkte Recyclingwege benötigt werden Dies sollte sich nur für die Produkte gelten, die relevante Mengen an Melamin enthalten.

Der Erfindung liegt daher die technische Aufgabe zu Grunde ein Verfahren zu entwickeln, dass mit den Reststoffen und Abfällen aus den verschiedenen Wertschöpfungsstufen Imprägnierung und der Holzwerkstoffherstellung und Rücknahmen von Produkten ein Recycling des Melamins ermöglicht. Das Verfahren soll Produkte liefern, die für die Herstellung von Imprägnaten, Beschichtungen oder Holzwerkstoffen eingesetzt werden können. Dabei soll berücksichtigt werden, dass wegen der Recyclingkosten eher höherwertige Nutzung bevorzugt werden sollten.

Diese Aufgabe wird durch ein Verfahren mit den Merkmalen des Anspruchs 1 gelöst.

Entsprechend wird ein Verfahren zum Abbau oder Aufschluss bzw. Depolymerisation von Melamin-Formaldehyd-Harz aus während der Herstellung und Verarbeitung von Holzwerkstoffplatten anfallenden Abfallprodukten bereitgestellt. Das aufzuschließende Melamin-Formaldehyd-Harz ist dabei insbesondere in den in Produktionsanlagen zur Herstellung und Weiterverarbeitung von Holzwerkstoffplatten anfallenden Abfällen bzw. Abfallprodukten von Papierlagen und Holzwerkstoffträgerpatten gebunden.

Das vorliegende Verfahren umfasst die folgenden Schritte:
- Bereitstellen von während der Herstellung und Verarbeitung von Holzwerkstoffplatten anfallenden Abfallprodukten, die polykondensiertes Melamin-Formaldehyd-Harz enthalten,
- Ggfs. Zerkleinern der Melamin-Formaldehyd-Harz-haltigen Abfallprodukte,
- Vermischen der Melamin-Formaldehyd-Harz-haltigen Abfallprodukte mit einer wässrigen 20 bis 70 Gew%-igen, bevorzugt 40 bis 60 Gew%-igen Lösung von mindestens einem Disulfit, Hydrogensulfit und/oder Dithionit,
- Erwärmen der Mischung aus Melamin-Formaldehyd-Harz -haltigen Abfallprodukten und mindestens einem Disulfit, Hydrogensulfit und/oder Dithionit auf Temperaturen zwischen 60°C und 120°C, bevorzugt zwischen 80°C und 110°C, bis eine klare Lösung erhalten wird,
- Abtrennen von nicht hydrolysierbaren Fremdstoffen (als Verschmutzungen) aus der klaren Lösung,
- Weiteres Erwärmen der von Fremdstoffen gereinigten Mischung aus Melamin-Formaldehyd-Harzhaltigen Abfallprodukten und mindestens einem Disulfit, Hydrogensulfit und/oder Dithionit bei Temperaturen zwischen 60°C und 120°C, bevorzugt zwischen 80°C und 110°C, unter Reaktionskontrolle bis kein polykondensiertes Melamin-Formaldehyd-Harz (mehr) in der Reaktionsmischung nachweisbar ist,
- Abkühlen der Reaktionsmischung und Abtrennen des dabei ausfallenden Gemisches aus monomeren Melamin und Melamin-Derivaten,
- Auftrennen des Gemisches aus monomeren Melamin und Melaminderivaten in Melamin, Methylolmelamine und Methylolmelaminsulfonsäuren .

Es wird demnach ein Verfahren bereitgestellt, in welchem eine duroplastische Harzmatrix in verschiedenen Abfallprodukten mit Hilfe von Bisulfit/Disulfit/Dithionit aufgeschlossen wird. Dabei werden die, mehr oder weniger vernetzten Melaminharze, die in den Reststoffen enthalten sind mit Hilfe der Sulfite reduktiv aufgeschlossen. Als Reaktionsprodukte entstehen Methylolmelamine und Methylolmelaminsulfonsäuren sowie in geringen Mengen Melamin, wobei die Methylolmelaminsulfonsäuren die Hauptkomponente (> 70%) darstellen.

Die Störstoffe bzw. Fremdstoffe, die in den verschiedenen Reststoffen oder Abfallprodukten enthalten sind, können während oder nach der Reaktion leicht abgetrennt werden. Hier bietet sich z. B. das Abfiltrieren oder das Abschöpfen von aufschwimmenden Fasern usw. an. Dies kann bereits während der Aufschlussreaktion (kontinuierlich) oder am Ende erfolgen. Bei der Aufarbeitung von Harzen ist dies nicht nötig, wobei auch dort in einem Reinigungsschritt Verunreinigungen abgetrennt werden sollten. Bei dem Aufschluss unter Rückfluss kochend wird die Melaminharzmatrix aufgebrochen und die wasser-unlöslichen Polykondensate gehen langsam in Lösung bzw. es kommt zu einer schrittweisen Hydrolyse der Polykondensate unter Freisetzung von Melamin und Melaminderivaten (Methylolmelamine und Methylolmelaminesulfonsäuren).

Die aus dem Polykondensat freigesetzten Melaminderivate fallen beim Abkühlen aus und können dann abfiltriert und gewaschen werden. Dabei werden auch die, je nach Abfall/Produkt unterschiedlichen Hilfsstoffe entfernt. Es handelt sich dabei um üblicherweise in den Harzen befindlichen Hilfsstoffe wie Härter, Elastifizierungsmittel Korund, Glaskugeln, Pigmente usw. Es werden aber auch andere Harze oder Leime entfernt (Harnstoffharz/-leim).

Die Melaminderivate können nach Trennung der Komponenten für verschiedenste Anwendungen genutzt werden. Nach Zugabe von Ammoniak oder anderen Aminen können die Methylolmelaminsulfonsäuren in die entsprechenden Ammoniumsalze überführt werden. Diese können als Härter verwendet werden. Es können aber auch die Methylolmelaminsulfonsäuren selbst verwendet werden. Die Methylolmelamine können wieder zur Herstellung von Melaminharzen/-leimen für die verschiedensten Anwendungen genutzt werden. Auch können sie als Formaldehydfänger bei der Herstellung von Holzwerkstoffen bei Einsatz von Harnstoff-Formaldehyd-Leimen als Bindemittel eingesetzt werden. Auch ein Einsatz als Leimkomponente zur Quellreduzierung kommt in Frage. Generell können die Komponenten auch als Flammschutzmittel bzw. einer Kombination Flammschutzmittel/Bindemittel in den verschiedensten Produkten genutzt werden (Holzwerkstoffe, Laminate usw.).

Das vorliegende Verfahren erfordert nicht den Einsatz von organischen Lösungsmitteln oder starken Säuren. Vielmehr werden Lösungen von Disulfiten oder Hydrogensulfiten verwendet, die auch in der Lebensmittelindustrie als Konservierungsmittel zum Einsatz kommen und daher toxikologisch und ökologisch unbedenklich sind. Die während des hydrolytischen Aufschlussentstehenden Alkalisulfate können ebenfalls einer Nutzung zugeführt werden.

In einer Ausführungsform des vorliegenden Verfahrens umfassen die während der Herstellung und Verarbeitung von Holzwerkstoffplatten anfallenden Melamin-Formaldehyd-Harz haltigen Abfallprodukte überlagertes Melaminharz, Melaminharzstaub, Overlayimprägnate, Dekorimprägnate, Gegenzugimprägnate, Kraftpapierimprägnate unbeschichtete oder beschichtete Holzwerkstoffplatten, wie HDF Platten, und/oder Laminate, wie Dünnlaminat, umfassen.

Unter einem überlagertem Melaminharz ist dabei ein Melamin-Formaldehydharz zu verstehen, welches bereits zumindest teilweise kondensiert ist und eine Trübung aufweist. Eine Überlagerung bei einem Melaminharz liegt insbesondere dann vor, wenn entweder die Viskosität stark angestiegen ist (Messung mit DIN-Becher 4mm gemäß EN ISO 2431:2011: Frischharz 20 -30 sec. überlagertes Harz: > 50 sec) oder das Harz trüb geworden ist.

Melaminharzstaub fällt an verschiedenen Stellen der Verarbeitung von Imprägnaten und Holzwerkstoffplatten an, wie z.B. am Clipper und bei der Besäumung.Die dabei entstehenden Melaminharzstäube weisen eine Korngrösse > 50 µm. max. von 100-300 µm. Bei den Besäummaterial handelt es sich Schnipsel mit einer Breite von ca. 10 mm und variablen Längen je nach Effektivität der Abkratzer.

Overlayimprägnate, Dekorimprägnate, Gegenzugimprägnate und Kraftpapierimprägnate basieren auf dünnen Papierlagen, die mit einem Harz, bevorzugt Melamin-Formaldehyd-Harz vollständig oder teilweise durchtränkt (imprägniert) sind.

Entsprechend können sowohl teilweise imprägnierte, d.h. einseitig imprägnierte, Papiere als auch vollständig imprägnierte Papiere verwendet werden. Im Falle von einseitig imprägnierten Papieren ist lediglich die gesamte Fläche einer Seite des Papieres gleichmäßig mit einem Imprägnierharz versehen. Die Menge des aufgebrachten Harzes liegt in diesem Falle zwischen 30 und 70 Gew%, bevorzugt zwischen 40 und 60 Gew%, insbesondere bevorzugt 50 Gew% bezogen auf das Papiergewicht des Papiers. Demgegenüber wird im Falle eines vollständig imprägnierten Papiers eine Harzmenge von 80 - 400 Gew%, bevorzugt 90-120 Gew%, insbesondere bevorzugt 100-110 Gew% bezogen auf das Papiergewicht des Papiers aufgetragen.

Overlaypapiere sind dünne Papiere, welche typischerweise bereits mit einem konventionellen Melaminharz getränkt wurden Es sind ebenfalls Overlaypapiere erhältlich, in denen bereits abriebfeste Partikel, wie zum Beispiel Korundpartikel in das Harz des Overlays eingemischt sind oder auf das mit Harz benetzte Overlay aufgestreut, um die Abriebfestigkeit zu erhöhen. Für die Imprägnierung von Overlaypapieren werden Harzaufträge mit bis zu 400 Gew% Melaminharz verwendet.

Dekorpapiere sind Spezialpapiere zur Oberflächenveredelung von Holzwerkstoffen, die eine hohe Dekorvielfalt ermöglichen. So sind neben den typischen Aufdrucken von diversen Holzstrukturen weitergehende Aufdrucke von geometrischen Formen oder künstlerischen Produkten erhältlich. Eine Einschränkung in der Motivwahl gibt es faktisch nicht. Um eine optimale Bedruckbarkeit zu gewährleisten, muss das verwendete Papier eine geeignete Glätte und Dimensionsstabilität aufweisen und ebenfalls für eine Penetration einer notwendigen Kunstharzimprägnierung geeignet sein. Der Harzauftrag bei Dekorimprägnaten liegt bei 100 bis 120 Gew%.

Gegenzugpapiere sind hochwertige, imprägnierte Papier für den Einsatz als Gegenzugmaterial z. B. für einseitige Flächenfurnierungen und andere einseitige Beschichtungen.

Kraftpapiere weisen eine hohe Festigkeit auf und bestehen aus Zellstofffasern, denen Stärke, Alaun und Leim zugesetzt sind, um Oberflächeneffekte und Festigkeitssteigerungen zu erzielen. Der Harzauftrag bei Kraftpapierimprägnaten liegt bei 100 bis 120 Gew%. Diese werden vor allem bei Verwendung als Kernlage von CPL mit einem Gemisch aus Melamin- und Phenolharz imprägniert.

Imprägnierungen können z.B. in einem Imprägnierbad, durch Walzen, durch Rasterwalzen, durch Aufrakeln oder auch durch Besprühen aufgebracht werden. In einer Ausführungsvariante werden die Papierlagen wie folgt behandelt: Zunächst wird die Papierlage rückseitig (z.B.in einer Tränkwanne) mit einem Harz mit einem Feststoffgehalt zwischen 50 und 70 Gew%, bevorzugt 60 Gew% imprägniert. Nach dem Durchlauf einer Atemstrecke erfolgt eine Tauchimpägnierung mit einem Harz. In einem Rakelsystem / Quetschwalzenpaar wird überschüssiges Harz entfernt, und optional werden (im Falle einer Overlaypapierlage) abriebfeste Partikel auf die imprägnierte Papierlage gestreut. Es erfolgt ein Trocknungsschritt auf eine Restfeuchte von ca. 6%. Das Imprägnat kann dann in Weise mit einer Holzwerkstoffplatte z.B. in einer Kurztaktpresse verpresst werden.

Holzwerkstoffplatten, wie Holzspan- und Holzfaserplatten wie z.B. MDF-, HDF-Platten, werden aus Holzspänen oder Holzfasern hergestellt, die durch Zerspanung der Holzhackschnitzel in einem Zerspaner oder ein Zerfaserungsprozess der Holzhackschnitzel in einem Refiner gewonnen werden. Die mit in Holzfaserplatten verwendeten Holzfasern weisen eine Länge zwischen 1,5 mm und 20 mm und eine Dicke zwischen 0,05 mm und 1 mm auf. Die Größe von in Holzspanplatten verwendeten Holzspänen ist abhängig davon, ob sie in der Deck- oder Mittelschicht eingesetzt werden. In der Mittelschicht beginnen die Späne bei > 0,125 mm Siebweite, in der Deckschicht bei > 0,8 - 1,0 mm.

Bevorzugte Bindemittel für Holzwerkstoffplatten sind formaldehydhaltige Klebstoffe, wie Melamin-Formaldehyd-Harze und Harnstoff-Formaldehyd-Harze. Die in Holzwerkstoffplatten verwendete Bindemittelmenge liegt typischerweise in einem Bereich zwischen 5 bis 25 Gew%, bevorzugt 8 bis 20 Gew%, insbesondere bevorzugt zwischen 10 und 15 Gew%. In bestimmten Anwendungen kann die Bindemittelmenge in Holzwerkstoffplatten auch über 25 Gew%, wie z.B. bis zu 30 - 50 Gew% betragen.

Im Falle von beschichteten Holzwerkstoffplatten werden die oben angeführten Papierimprägnate auf die Holzwerkstoffplatten aufgelegt und verpresst. Typischerweise wird zunächst das imprägnierte Dekorpapier auf die Oberseite der Holzwerkstoffplatte aufgebracht. Auf das Dekorimprägnat folgt anschließend mindestens ein Overlayimprägnat. Das Gegenzugimprägnat wird unterseitig mit der Holzwerkstoffplatte verpresst. Ein typischer Aufbau einer beschichteten HDF-Platte ist von oben nach unten: Overlayimprägnat, Dekorimprägnat, HDF Träger, Gegenzugimprägnat.

Laminate sind Schichtstoffe aus miteinander verpressten Papierimprägnaten, die auf Trägerplatten aufkaschiert werden.

Derzeitig im Stand der Technik bekannt sind z.B. flexible Laminate, bei denen der Schichtverbund mindestens eine imprägnierte Papierlage, wie z.B. ein Dekorimprägnat, mindestens eine Transparentpapierlage (Pergamin), z.B. mit Schwefelsäure behandeltes Pergamin, und/oder mindestens eine Kunststofffolienlage vorgesehen. Pergamin ist ein aus fein gemahlenem Zellstoff hergestelltes, weitgehend fettdichtes, aber nicht nassfestes Transparentpapier. Seine hohe Transparenz erhält es durch sehr scharfe Satinage. Die verschiedenen Lagen bzw. Schichten können mehrfach im Laminataufbau enthalten sein, sich abwechseln bzw. ihre Position vertauschen.

Die im Laminat verwendete Kunststofffolienlage besteht aus Polymeren, insbesondere aus Polypropylen (PP), Polyethylen (PE), Polyethylenterephthalat (PET), thermoplastisches Polyurethan (TPU) oder Polyurethan. Derartige Kunststofffolien werden insbesondere bei empfindlichen Oberflächen als Schutzfolien verwendet.

Die Melamin-Formaldehyd-Harz-haltigen Abfallprodukte können neben Zellulosefasern, Holzfasern, und Holzspänen auch anorganische abriebfeste Partikel, Glaskugeln, Farbpigmente, weitere Bindemittel, wie Harnstoffharze, und andere Additive enthalten. Die Zellulosefasern stammen dabei aus imprägnierten Papieren, wie den beschriebenen Dekorimprägnat, Overlayimprägnat, Gegenzugimprägnat. Anorganische Partikel, wie abriebfeste Partikel (Korund) sind in Overlayimprägnaten enthalten. Holzfasern stammen aus Holzwerkstoffplatten (wie HDF-, MDF-Platten) und Holzspäne aus Holzspanplatten. Farbpigmente sind bevorzugt in Dekorimprägnaten zu finden. Weitere Additive umfassen Flammschutzmittel, Härter, Elastifizierungsmittel, Wachse.

Die angeführten Feststoffe, die in den Melamin-Formaldehyd-Harz haltigen Abfallprodukten enthalten sind, fallen im Verlaufe des Aufschlussverfahrens als Fremdstoffe bzw. Verschmutzungen an und werden wie erwähnt während des Aufschlusserfahrens abgetrennt.

Wie ersichtlich, unterscheiden sich die aufzuschließenden Melamin-Formaldehyd-Harz haltigen Abfallprodukte in ihrer Zusammensetzung, so dass optionale weitergehende Anpassungen und Modifikationen des vorliegenden Verfahrens möglich sind.

Während der Aufschluss von Melaminharzstaub keine weitergehende Zerkleinerung des Abfallproduktes vor Vermischen mit der mindestens einem Disulfit, Hydrogensulfit und/oder Dithionit Lösung erfordert, ist dies bei den weiteren Abfallprodukten angezeigt.

So ist im Falle der Verwendung von Dekorimprägnat, Overlayimprägnat, Gegenzugimprägnat, beschichteten und unbeschichteten Holzwerkstoffplatten sowie Laminaten eine Zerkleinerung der Abfallprodukte jedoch notwendig. Entsprechend werden in einer Ausführungsform diese Melamin-Formaldehyd-Harz-haltigen Abfallprodukte auf eine Partikelgröße zwischen 0.1 und 10 mm, bevorzugt zwischen 0,5 und 3 mm zerkleinert. Der Aufschluss funktioniert am besten mit sehr fein gemahlenem Material mit einer Partikelgröße kleiner 3 mm.

Im Falle einer mit Overlayimprägnat, Dekorimprägnat, und/oder Gegenzugimprägnat beschichteten Holzwerkstoffplatte (wie Holzfaserplatte oder Holzspanplatte) ist es zudem von Vorteil die beschichtete Holzwerkstoffplatte zunächst nur vorzuzerkleinern (z.B. auf ein Format von 5 x 5 cm). Die vorzerkleinerten Stücke werden zunächst in einer Dampfatmosphäre behandelt, um das in der Holzwerkstoffplatte vorhandene zusätzliche Bindemittel (bevorzugt Harnstoff-Formaldehyd-Harz) zu hydrolysieren.

Der nach der Hydrolyse erhaltene Rückstand (bevorzugt aus den Imprägnaten und Holzfasern oder Holzspäne) wird abgetrennt und weiter zerkleinert und erst dann mit der mindestens einem Disulfit, Hydrogensulfit und/oder Dithionit Lösung zum hydrolytischen Abbau des Melamin-Formaldehyd-Harzes gemäß dem vorliegenden Verfahren versetzt.

Das in den Abfallprodukten enthaltene und aufzuschließende Melamin-Formaldehyd-Harz weist ein molares Verhältnis von Melamin / Formaldehyd von 1/1,5 bis 1 / 2,5, bevorzugt von 1 / 1,6 bis 1 / 2,3, insbesondere bevorzugt von 1 / 1,6 bis 1 / 1,8 auf.

In einer Ausführungsform des vorliegenden Verfahrens ist das aufzuschließende polykondensierte Melamin-Formaldehyd-Harz in den Abfallprodukten noch nicht vollständig ausgehärtet; d.h. das Polykondensat ist noch nicht vollständig vernetzt. Dies trifft insbesondere auf überlagertes Harz und imprägnierte Papierlagen (die noch keinem Pressschritt ausgesetzt waren) zu.

In einer weiteren Ausführungsform des vorliegenden Verfahrens ist das aufzuschließende polykondensierte Melamin-Formaldehyd-Harz in den Abfallprodukten hingegen vollständig ausgehärtet. Dies trifft insbesondere auf verpresste unbeschichtete und beschichtete Holzwerkstoffplatten und Laminate zu.

Die unterschiedlichen Polymerisations- und Vernetzungszustände von Melamin-Formaldehyd-Harz seien im Folgenden kurz dargestellt.

Melamin und Formaldehyd reagieren zunächst unter Ausbildung von Methylolgruppen an den Aminogruppen des Melamins zu wasserlöslichen Monomerprodukten (siehe Schema I). Diese Melamin-Formaldehyd-Monomere werden auch als Melaminmethylole bezeichnet.

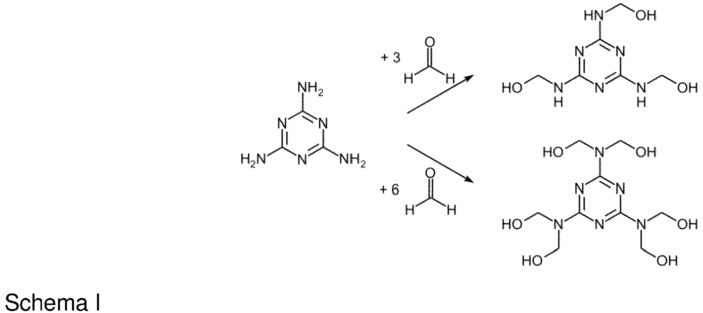

Die Melamin-Formaldehyd-Monomere unterliegen nach Zugabe eines geeigneten Katalysators, bevorzugt einer Säure, der Polykondensation, wobei es zur Verknüpfung der Monomere über Ether- und Methylengruppen und zur Ausbildung von höhermolekularen Prekondensaten und Polykondensaten kommt (siehe Schema II).

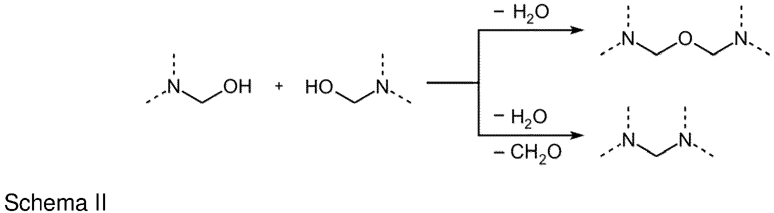

Prekondensate und Polykondensate unterscheiden sich hinsichtlich ihrer Molmasse und ihrer Löslichkeit. So können die niedermolekularen Prekondensate noch über eine begrenzte Wasserlöslichkeit verfügen, während die höhermolekularen Polykondensate unlöslich sind. Die begrenzte Wasserlöslichkeit der Prekondensate ist u.a. durch noch freie Methylolgruppen und den geringen Vernetzungsgrad der meist noch linearen Oligomere bedingt. Die Prekondensate sind somit ein Polymerisationszwischenprodukt.

Bei einer vollständigen Härtung der Polykondensate kommt es zu einer starken Vernetzung unter Abspaltung der noch vorhandenen Methylolgruppen, wobei sich über Methylengruppen engmaschig vernetzte Kunststoffe ausbilden (siehe Schema III).

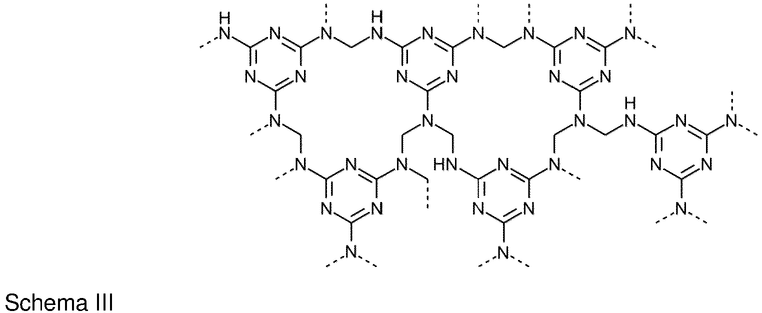

Bei über Kondensationsreaktionen aushärtenden Kunstharzen werden daher folgende Harzzustände unterschieden:
- A-Zustand: leicht in Lösemittel löslich, schmelzbar, härtbar;
- B-Zustand: nur noch teilweise in Lösemittel löslich, schmelzbar, härtbar;
- C-Zustand: unlöslich, ausgehärtet

Der Aufschluss eines noch nicht vollständig ausgehärteten Harzes (d.h. eines Harzes im teilvernetzten B-Zustand) ist aufgrund des geringeren Vernetzungsgrades des Harzes bevorzugt.

In einer Ausführungsform des vorliegenden Verfahrens werden die Melamin-Formaldehyd-Harz haltigen Abfallprodukte mit einer wässrigen 20 bis 70 Gew%- igen, bevorzugt 40-60 Gew%-igen Alkali- oder Erdalkali-Lösung von mindestens einem Disulfit, Hydrogensulfit und/oder Dithionit vermischt.

Insbesondere werden die Melamin-Formaldehyd-Harz haltigen Abfallprodukte mit mindestens einer Natrium- disulfit oder -hydrogensulfit Lösung mit einem pH-Wert zwischen 3,0 und 6, bevorzugt zwischen 3,5 und 5,5 vermischt werden. Natriumdisulfit, (Na₂S₂O₅) auch Natriumpyrosulfit oder Natriummetabisulfit genannt, ist ein Natriumsalz der in freier Form nicht stabilen dischwefligen Säure. Natriumhydrogensulfit (NaHSO₃), auch Natriumbisulfit, ist ein Natrium-Salz der schwefligen Säure. Es ist außerhalb von wässrigen Lösungen nicht stabil.

In einer besonders bevorzugten Ausführungsform werden die Melamin-Formaldehyd-Harz haltigen Abfallprodukte mit mindestens einer 40-60 Gew%-igen, insbesondere 50 Gew%-igen Natriumhydrogensulfit (bzw. Natriumbisulfit)-Lösung vermischt.

Wie oben erwähnt, wird in einem nächsten Schritt die Mischung aus Melamin-Formaldehyd-Harz-haltigen Abfallprodukten und mindestens einem Disulfit, Hydrogensulfit und/oder Dithionit auf Temperaturen zwischen 60 und 120°C, bevorzugt zwischen 80 und 100°C, erwärmt, bis eine klare Lösung erhalten wird.

Vorliegend ist unter einer klaren Lösung zu verstehen, dass keine Trübung erkennbar ist (d.h. die Lösung ist durchsichtig), lediglich die als Verschmutzungen enthaltenden Feststoffe sind erkennbar.

Die erwähnten Fremdstoffe werden aus der klaren Lösung in einem Zwischenschritt abgetrennt. Das Abtrennen der in der Reaktionsmischung als Verschmutzungen enthaltenen Feststoffe erfolgt mittels Filtration, bevorzugt Heissfitration, und/oder Abschöpfen. So können die aus den Papierlagen oder Holzwerkstoffplatten freigesetzten und aufschwimmenden Fasern abgeschöpft werden und andere Partikel, wie Korund und/oder Glaskugeln, durch Heissfiltration abgetrennt werden.

Es schließt sich ein weiteres Erwärmen der von Fremdstoffen gereinigten Reaktionsmischung aus Melamin-Formaldehyd-Harz haltigen Abfallprodukten und mindestens einem Disulfit, Hydrogensulfit und/oder Dithionit bei Temperaturen zwischen 60 und 120°C, bevorzugt zwischen 80 und 110°C, unter Reaktionskontrolle an bis keine Melamin-Formaldehyd-HarzOligomere länger in der Reaktionsmischung nachweisbar sind.

De Reaktionskontrolle der Depolymerisation bzw. des hydrolytischen Abbaus des Melamin-Formaldehyd-Harzes erfolgt unter Verwendung von geeigneten analytischen Methoden, wie Dünnschichtchromatographie, HPLC oder Gaschromatographie.

Nach erfolgter Depolymerisation des Melamin-Formaldehyd-Harzes wird die Reaktionsmischung abgekühlt. Während des Abkühlens der Reaktionsmischung kommt es zum Ausfällen des Produktgemisches aus monomeren Melaminderivaten.

Das Gemisch aus Melamin und monomeren Melaminderivate umfasst Methylolmelamine, insbesondere Monomethylolmelamin und Dimethylolmelamin, und Methylolmelaminsulfonsäuren , insbesondere Dimethylol-melamin-sulfonsäure und Monomethylol-melaminsulfonsäure. Der Anteil an Methylolmelaminen beträgt ca. 10-30 Gew% und der Anteil an Methylolmelaminsulfonsäuren ca 70-90 Gew%..

In einen abschließenden Schritt wird das Gemisch aus Melamin und monomeren Melaminderivaten in Melamin, Methylolmelamine und Methylolmelaminsulfonsäuren aufgetrennt. Das Auftrennen kann durch Zugabe von Ammoniak oder Aminen zu dem Gemisch aus Melamin und monomeren Melaminderivaten erfolgen, wobei Methylolmelaminsulfonsäuren in eine lösliche Form überführt werden und von Melamin und Methylolmelamine abgetrennt werden.

Die aus dem Melamin-Formaldehyd-Harz gewonnenen Methylolmelamine und Methylolmelaminsulfonsäuren können verschiedenen Verwendungen zugeführt werden. So können Methylolmelaminsulfonsäuren als Härter und Methylolmelamine für die Herstellung von Melaminharz zur Verwendung als Bindemittel oder Imprägniermittel eingesetzt werden.

Die Erfindung wird im Folgenden anhand von Ausführungsbeispielen näher erläutert.

### Generelles:

Bei den Ausführungsbeispielen wurde der Reaktionsfortschritt über Dünnschicht-chromatographie verfolgt. Dabei wurden zum Vergleich Melaminharze-/vorstufen mitlaufen gelassen, die eine Beurteilung des Abbaufortschrittes zu liessen. Es handelte sich dabei um Melamin, Monomethylolmelamin, Dimethylmelamin und ein Melaminharz.

### Ausführungsbeispiel 1: Aufschluss Melaminreststoff Harzabfälle

Von einem Melaminharz, dass wegen Überlagerung bereits trüb geworden war, wurden 100 g fl. (Feststoffgehalt: 55 Gew%, Molverhältnis Melamin/Formaldehyd: ca. 1/1,8) in einen 1000 ml Dreihalsrundkolben überführt und mit 300 g einer 50%igen Natriumdisulfitlösung versetzt.

Das Gemisch wurde unter Rückfluss gekocht, wobei sich die Trübung nach ca. 3 Stunden auflöste. Der Reaktionsfortgang wurde mit Dünnschichtchromatographie überwacht ( Laufmittel: Wasser/Ethanol (1/1) . Nachdem mit Hilfe der Dünnschichtchromatographie keine Harzoligomere mehr nachweisbar waren (6 h) wurde die Reaktionslösung abgekühlt, das ausfallende Produkt über eine Saugnutsche abgesaugt, mit kaltem Wasser gewaschen und dann getrocknet.

Das hellgelbe Produkt ist ein Gemisch aus Mono- und Dimethylolmelaminen und Mono- und Dimethylolmelaminsulfonsäuren. Das Filtrat wurde nochmals um die Hälfte eingeengt und das ausfallende Produkt ebenfalls gewaschen und getrocknet. Die Ausbeute betrug unter Berücksichtigung von ca. 10 Gew% Hilfsstoffen im Harz ( Elastifizierungsmittel, Härter usw. ) 95%.

### Ausführungsbeispiel 2: Aufschluss Melaminreststoffe

Melaminharzstaub, der in einer Imprägnierung am Clipper und an der Besäumung angefallen war, wurden 100 g fest. (Molverhältnis Melamin/Formaldehyd: ca. 1/1,8) in einen 2000 ml Dreihalsrundkolben überführt und mit 600 g einer 50%igen Natriumbisulfitlösung versetzt.

Das Gemisch wurde unter Rückfluss gekocht, wobei sich das Harz langsam auflöste. Nachdem eine klare Lösung entstanden war, wurden zunächst aufgeschwommene Fasern (Papier und Cellulose) abgeschöpft, dann heiss filtriert, um Korund und Glaskugeln abzutrennen. Diese wurden nach Waschen einer erneuten Nutzung zugeführt. Danach wurde weiter unter Rückfluss gekocht. Der Reaktionsfortgang wurde mit Dünnschichtchromatographie überwacht (Laufmittel: Wasser/Ethanol (1/1) . Nachdem mit Hilfe der Dünnschichtchromatographie keine Harzoligomere mehr nachweisbar waren (12 h ) wurde die Reaktionslösung abgekühlt, das ausfallende Produkt über eine Saugnutsche abgesaugt, mit kaltem Wasser gewaschen und dann getrocknet.

Das hellgelbe Produkt ist ein Gemisch aus Mono- und Dimethylolmelaminen und Mono- und Dimethylolmelaminsulfonsäuren. Die Ausbeute betrug unter Berücksichtigung von ca. 10 Gew% Hilfsstoffen im Harz (Elastifizierungsmittel, Härter usw. ) 91%. In einem weiteren Versuch wurde die Menge an Natriumbisulfit auf 150 g in 300 ml Wasser reduziert. Bezüglich der Ausbeute war kein Unterschied feststellbar.

### Ausführungsbeispiel 3: Aufschluss Melaminreststoff Overlay

Overlayimprägnate, die auf Grund einer Überlagerung nicht mehr in der Produktion eingesetzt werden konnten, wurden in einer Labormühle unter Kühlung zu Staub zermahlen. Von diesem Overlayimprägnat wurden 100 g fest. (Molverhältnis Harz: Melamin/Formaldehyd: ca. 1/1,8 ) in einen 2000 ml Dreihalsrundkolben überführt und mit 400 g einer 50%igen Natriumdisulfitlösung versetzt.

Das Gemisch wurde unter Rückfluss gekocht. Nachdem eine klare Lösung entstanden war, wurde heiss filtriert, um Papierfasern, Korund usw. abzutrennen. Danach wurde weiter unter Rückfluss gekocht. Der Reaktionsfortgang wurde mit Dünnschichtchromatographie überwacht (Laufmittel: Wasser/Ethanol (1/1). Nachdem mit Hilfe der Dünnschicht-chromatographie keine Harzoligomere mehr nachweisbar waren (12 h) wurde die Reaktionslösung abgekühlt, das ausfallende Produkt über eine Saugnutsche abgesaugt, mit kaltem Wasser gewaschen und dann getrocknet.

Das hellgelbe Produkt ist ein Gemisch aus Mono- und Dimethylolmelaminen und Mono- und Dimethylolmelaminsulfonsäuren. Die Ausbeute betrug unter Berücksichtigung von ca. 20 Gew% Hilfsstoffen im Overlayimprägnat (Elastifizierungsmittel, Korund, Härter usw.) 86 %.

### Ausführungsbeispiel 4: Aufschluss Dekorimprägnat

Dekorimprägnate, die auf Grund einer Überlagerung nicht mehr in der Produktion eingesetzt werden konnten, wurden in einer Labormühle unter Kühlung zu Staub zermahlen. Es handelte sich dabei um Imprägnate, die eine Kernimprägnierung mit Harnstoffharz besassen (Harzauftrag: ca 50 Gew%) und zweite abdeckende Imprägnierung mit Melaminharz (Harzauftrag: ca. 50 Gew%). Von diesem Dekorimprägnat wurden 200 g fest. (Molverhältnis Harz: Melamin/Formaldehyd: ca. 1/1,8) in einen 2000 ml Dreihalsrundkolben überführt und mit 400 g einer 30%igen Natriumdisulfitlösung versetzt.

Das Gemisch wurde unter Rückfluss gekocht. Nachdem eine klare Lösung entstanden war, wurde heiss filtriert, um Papierfasern, Korund usw. abzutrennen. Danach wurde weiter unter Rückfluss gekocht. Der Reaktionsfortgang wurde mit Dünnschichtchromatographie überwacht (Laufmittel: Wasser/Ethanol (1/1). Nachdem mit Hilfe der Dünnschicht-chromatographie keine Harzoligomere mehr nachweisbar waren ( 12 h ) wurde die Reaktionslösung abgekühlt, das ausfallende Produkt über eine Saugnutsche abgesaugt, mit kaltem Wasser gewaschen und dann getrocknet.

Das hellgelbe Produkt ist ein Gemisch aus Mono- und Dimethylolmelaminen und Mono- und Dimethylolmelaminsulfonsäuren. Die Ausbeute betrug unter Berücksichtigung von ca. 10 Gew% Hilfsstoffen im Harz ( Elastifizierungsmittel, Härter usw. ) und ca. 50 Gew% Harnstoffharz im Kern 78 %.

### Ausführungsbeispiel 5: Aufschluss HDF mit hohem Melaminanteil

Eine HDF, die ca. 50 Gew% Bindemittel und davon ca. 80 Gew% Melaminharz enthält, wurde in einer Labormühle unter Kühlung zu Staub zermahlen. Von diesem Staub wurden 200 g fest in einen 2000 ml Dreihalsrundkolben überführt und mit 400 g einer 30%igen Natriumdisulfitlösung versetzt.

Das Gemisch wurde unter Rückfluss gekocht ( ca. 6 h ). Dann wurde heiss filtriert, um Fasern usw. abzutrennen. Danach wurde weiter unter Rückfluss gekocht. Der Reaktionsfortgang wurde mit Dünnschichtchromatographie überwacht (Laufmittel: Wasser/Ethanol (1/1). Nachdem mit Hilfe der Dünnschicht-Chromatographie keine Harzoligomere mehr nachweisbar waren (12 h) wurde die Reaktionslösung abgekühlt, das ausfallende Produkt über eine Saugnutsche abgesaugt, mit kaltem Wasser gewaschen und dann getrocknet.

Das hellgelbe Produkt ist ein Gemisch aus Mono- und Dimethylolmelaminen und Mono- und Dimethylolmelaminsulfonsäuren. Die Ausbeute betrug unter Berücksichtigung von ca. 10 Gew% Hilfsstoffen im Harz ( Elastifizierungsmittel, Härter usw. ) 55 %.

### Ausführungsbeispiel 6: Aufschluss Dünnlaminat

Ein Dünnlaminat ( Dekor und Pergament ) wurde in einer Labormühle unter Kühlung zu Staub zerkleinert. Das Dünnlaminat bestand aus einem Dekorimprägnat (Papier-gewicht: 100 g/m², Harzauftrag: 120% ) und einem Pergament: Papiergewicht: 40 g/m². Von dem zerkleinerten Dünnlaminat wurden 200 g in einen 2000 ml Dreihalsrundkolben überführt und mit 600 g einer 30%igen Natriumdisulfitlösung versetzt.

Das Gemisch wurde unter Rückfluss gekocht. Nachdem eine klare Lösung entstanden war, wurde heiss filtriert, um die Papierfasern abzutrennen. Danach wurde weiter unter Rückfluss gekocht. Der Reaktionsfortgang wurde mit Dünnschichtchromatographie überwacht ( Laufmittel: Wasser/Ethanol (1/1). Nachdem mit Hilfe der Dünnschicht-chromatographie keine Harzoligomere mehr nachweisbar waren (12 h) wurde die Reaktionslösung abgekühlt, das ausfallende Produkt über eine Saugnutsche abgesaugt, mit kaltem Wasser gewaschen und dann getrocknet.

Das hellgelbe Produkt ist ein Gemisch aus Mono- und Dimethylolmelaminen und Mono- und Dimethylolmelaminsulfonsäuren. Die Ausbeute betrug unter Berücksichtigung von ca. 10 Gew% Hilfsstoffen im Harz ( Elastifizierungsmittel, Härter usw. ) bei 81 %.

### Ausführungsbeispiel 7: Aufschluss Direktbeschichtung Fussbodenaufbau

Ein Laminatboden mit HDF-Träger aus einer Rücknahme wurde in einer Zerkleinerungsvorrichtung (Hacker) auf ein Format von ca. 5 x 5 cm vorzerkleinert. Die Beschichtung des Laminatbodens bestand aus einem Overlayimprägnat (Papiergewicht. 25g/m², Harzauftrag: 400% Melaminharz), einem Dekorimprägnat (Papiergewicht: 60 g/m². Harzauftrag: 100%) und einem Gegenzug (Papiergewicht: 80 g/m², Harzauftrag: 120% Melaminharz). Anschließend erfolgte in einem Kocher bei erhöhtem Druck in einer Dampfatmosphere eine Hydrolyse des Harnstoff-Formaldehyd-Leims der HDF.

Die Beschichtungen wurden von den Holzfasern abgesiebt und in einer Labormühle unter Kühlung zu Staub zermahlen. Die Feuchte der Beschichtungen lag bei ca. 20 %. Von der zermahlenen Beschichtung wurden 200 g trocken in einen 2000 ml Dreihalsrundkolben überführt und mit 400 g einer 30%igen Natriumdisulfitlösung versetzt.

Das Gemisch wurde unter Rückfluss gekocht. Nachdem eine klare Lösung entstanden war, wurde heiss filtriert, um Papierfasern, Holzfasern, Korund usw. abzutrennen. Danach wurde weiter unter Rückfluss gekocht. Der Reaktionsfortgang wurde mit Dünnschichtchromatographie überwacht (Laufmittel: Wasser/Ethanol (1/1). Nachdem mit Hilfe der Dünnschicht-chromatographie keine Harzoligomere mehr nachweisbar waren (12 h) wurde die Reaktionslösung abgekühlt, das ausfallende Produkt über eine Saugnutsche abgesaugt, mit kaltem Wasser gewaschen und dann getrocknet.

Das hellgelbe Produkt ist ein Gemisch aus Mono- und Dimethylolmelaminen und Mono- und Dimethylolmelaminsulfonsäuren. Die Ausbeute betrug unter Berücksichtigung von ca. 20 Gew% Hilfsstoffen im Harz ( Elastifizierungsmittel, Korund, Härter usw. ) 65 %.

### Ausführungsbeispiel 8: Verwendung Methylolmelaminsulfonsäure als Härter

Das hellgelbe Produkt aus dem Ausführungsbeispiel 1 wird in warmem Wasser gelöst ( 50°C, 20%ige Lösung ). Es enthält Methylolmelamine und Methylolmelaminsulfonsäuren .

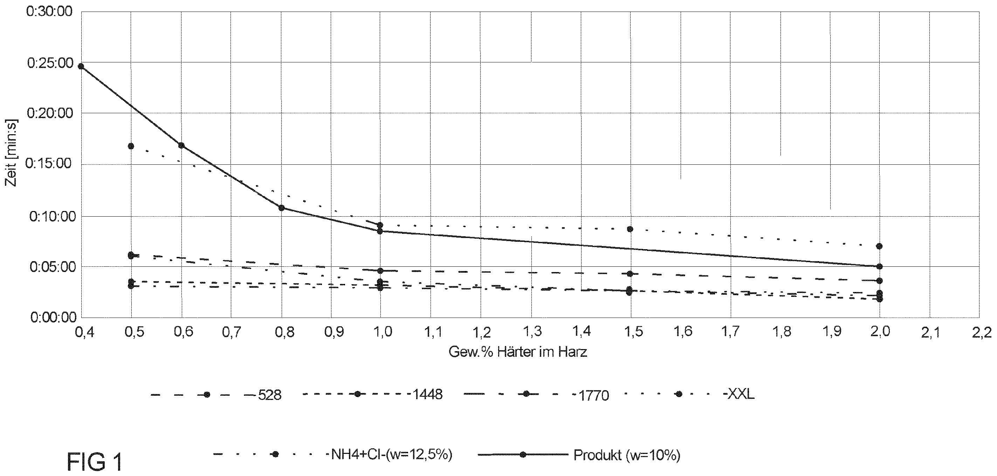

Die klare Lösung wird als Härter für Melaminharze (BASF Kauramin 796) eingesetzt. Dabei wird das Aushärtungsverhalten mit bereits im Einsatz befindlichen Härtern verglichen (siehe Tabelle 1 und Diagramm der Figur 1).

| Gelierzeiten Melaminharz BASF Kauramin 796 ( Feststoffgehalt ca. 63%) | | | | | | |
|---|---|---|---|---|---|---|
| Härter flüssig / flüssig Gew. % | 528 | 1448 | 1770 | XXL | Härter Sulfonsäure fest / flüssig Gew. % | Produkt |
| | | | | | | |
| 0,5 | 06:08 | 03:31 | 03:03 | 16:44 | 0,4 | 24:34 |
| 1,0 | 04:30 | 03:08 | 02:52 | 08:58 | 0,6 | 16:49 |
| 1,5 | 04:10 | 02:35 | 02:24 | 08:34 | 0,8 | 10:44 |
| 2,0 | 03:28 | 01:51 | 02:10 | 06:55 | 1,0 | 8:23 |

Wie die Vergleiche zeigen ist der Melaminsulfone-Härter als latenter Härter einzustufen ( ähnlich wie XXL). Diese Härter werden heute bevorzugt eingesetzt, weil bei deren Einsatz Voraushärtungen im Prozess vermieden werden.

### Ausführungsbeispiel 9: Verwendung Melaminmethylole zur Kondensation

Das hellgelbe Produkt aus Ausführungsbeispiel 1 wird zu warmem Wasser ( 30°C ) gegeben. Dann wird zu der Slurry konz. Ammoniak bis zu einem pH-Wert von 7,5 dosiert. Dabei gehen die Methylolmelaminsulfonsäure in Lösung. Diese können als Härter für Melaminharze verwendet werden (siehe Ausführungsbeispiel 7). Dann wird abgesaugt. Der Filter mit den Methylolmelaminen wird getrocknet. Der Anteil der Methylolmelamine liegt je nach Molverhältnis ( Melamin zu Formaldehyd ) im recycelten Melaminharz bei 10 bis 30 Gew%. In diesem Fall lag er bei 20 Gew%.

Die Methylolmelamine wurden anschließend zur Herstellung eines Melaminharzes eingesetzt, wobei der Anteil der recycelten Methylolmelaminen bei 20 Gew% lag. Es wurde dabei angenommen, dass das Verhältnis von Melamin zu Formaldehyd bei 1 zu 1,5 lag.

## Patentansprüche

1. Verfahren zum Abbau von Melamin-Formaldehyd-Harz aus während der Herstellung und Verarbeitung von Holzwerkstoffplatten anfallenden Abfallprodukten
**gekennzeichnet durch** die folgenden Schritte
- Bereitstellen von während der Herstellung und Verarbeitung von Holzwerkstoffplatten anfallenden Abfallprodukten, die polykondensiertes Melamin-Formaldehyd-Harz enthalten,
- Ggfs. Zerkleinern der Melamin-Formaldehyd-Harz-haltigen Abfallprodukte,
- Vermischen der Melamin-Formaldehyd-Harz-haltigen Abfallprodukte mit einer wässrigen 20 bis 70 Gew%-igen, bevorzugt 40 bis 60 Gew%-igen Lösung von mindestens einem Disulfit, Hydrogensulfit und/oder Dithionit,
- Erwärmen der Mischung aus Melamin-Formaldehyd-Harz -haltigen Abfallprodukten und mindestens einem Disulfit, Hydrogensulfit und/oder Dithionit auf Temperaturen zwischen 60°C und 120°C, bevorzugt zwischen 80°C und 100°C, bis eine klare Lösung erhalten wird,
- Abtrennen von Fremdstoffen aus der klaren Lösung,
- Weiteres Erwärmen der von Fremdstoffen gereinigten Mischung aus Melamin-Formaldehyd-Harz haltigen Abfallprodukten und mindestens einem Disulfit, Hydrogensulfit und/oder Dithionit bei Temperaturen zwischen 60°C und 120°C, bevorzugt zwischen 80°C und 110°C, unter Reaktionskontrolle bis kein polykondensiertes Melamin-Formaldehyd-Harz in der Reaktionsmischung nachweisbar ist,
- Abkühlen der Reaktionsmischung und Abtrennen des dabei ausfallenden Gemisches aus Melamin und monomeren Melamin-Derivaten,
- Auftrennen des Gemisches aus Melamin und monomeren Melaminderivaten in Methylolmelamine und Methylolmelaminsulfonsäuren .

2. Verfahren nach Anspruch 1, **dadurch gekennzeichnet, dass** die während der Herstellung und Verarbeitung von Holzwerkstoffplatten anfallenden Melamin-Formaldehyd-Harz haltigen Abfallprodukte überlagertes Melaminharz, Melaminharzstaub, Overlayimprägnate, Dekorimprägnate, unbeschichtete oder beschichtete Holzwerkstoffplatten, wie HDF Platten, und/oder Laminate, wie Dünnlaminat, umfassen.

3. Verfahren nach einem der vorhergehenden Ansprüche, **dadurch gekennzeichnet, dass** die Melamin-Formaldehyd-Harz-haltigen Abfallprodukte Zellulosefasern, Holzfasern, anorganische abriebfeste Partikel, Glaskugeln, Farbpigmente, weitere Bindemittel und andere Additive enthalten.

4. Verfahren nach einem der vorhergehenden Ansprüche, **dadurch gekennzeichnet, dass** das in den Abfallprodukten enthaltene Melamin-Formaldehyd-Harz ein molares Verhältnis von Melamin / Formaldehyd von 1/1,5 bis 1 / 2,5, bevorzugt von 1 / 1,6 bis 1 / 2,3, insbesondere bevorzugt 1 / 1,6 bis 1/1,8 aufweist.

5. Verfahren nach einem der vorhergehenden Ansprüche, **dadurch gekennzeichnet, dass** die Melamin-Formaldehyd-Harz haltigen Abfallprodukte auf eine Partikelgröße zwischen 0.1 und 10 mm, bevorzugt zwischen 0,5 und 3 mm zerkleinert werden.

6. Verfahren nach einem der vorhergehenden Ansprüche, **dadurch gekennzeichnet, dass** die Melamin-Formaldehyd-Harz haltigen Abfallprodukte mit einer wässrigen 20 bis 70 Gew%- igen, bevorzugt 40-60 Gew%-igen Alkali- oder Erdalkali-Lösung von mindestens einem Disulfit, Hydrogensulfit und/oder Dithionit vermischt werden.

7. Verfahren nach einem der vorhergehenden Ansprüche, **dadurch gekennzeichnet, dass** die Melamin-Formaldehyd-Harz haltigen Abfallprodukte mit mindestens einer Natrium disulfit oder -hydrogensulfit Lösung mit einem pH-Wert zwischen 3,0 und 6, bevorzugt zwischen 3,5 und 5,5 vermischt werden.

8. Verfahren nach einem der vorhergehenden Ansprüche, **dadurch gekennzeichnet, dass** die Melamin-Formaldehyd-Harz haltigen Abfallprodukte mit mindestens einer 40-60 Gew%-igen, insbesondere 50 Gew%-igen Natriumhydrogensulfit Lösung vermischt werden.

9. Verfahren nach einem der vorhergehenden Ansprüche, **dadurch gekennzeichnet, dass** das Abtrennen der in der Reaktionsmischung enthaltenen Fremdstoffen mittels Filtration, bevorzugt Heissfitration, und/oder Abschöpfen erfolgt.

10. Verfahren nach einem der vorhergehenden Ansprüche, **dadurch gekennzeichnet, dass** die Reaktionskontrolle des Abbaus des Melamin-Formaldehyd-Harzes unter Verwendung von geeigneten analytischen Methoden, wie Dünnschichtchromatographie, HPLC oder Gaschromatographie, erfolgt.

11. Verfahren nach einem der vorhergehenden Ansprüche, **dadurch gekennzeichnet, dass** durch Zugabe von Ammoniak oder Aminen zu dem Gemisch aus monomeren Melaminderivaten Methylolmelaminsulfonsäuren in eine lösliche Form überführt werden und von Methylolmelaminen und Melamin abgetrennt werden.

## Claims

1. Process for the degradation of melamine-formaldehyde resin from waste products generated during the manufacture and processing of wood-based panels
**characterized by** the following steps
- Providing waste products generated during the manufacture and processing of wood-based panels that contain polycondensed melamine-formaldehyde resin,
- If necessary, shredding the melamine-formaldehyde-resin-containing waste products,
- Mixing the melamine-formaldehyde-resin-containing waste products with an aqueous 20 to 70% by weight, preferably 40 to 60% by weight, solution of at least one disulfite, hydrogen sulfite and/or dithionite,
- Heating the mixture of melamine-formaldehyde resin-containing waste products and at least one disulfite, hydrogen sulfite and/or dithionite to temperatures between 60°C and 120°C, preferably between 80°C and 100°C, until a clear solution is obtained,
- Separating foreign substances from the clear solution,
- Further heating of the mixture of melamine-formaldehyde resin-containing waste products purified from foreign substances and at least one disulfite, hydrogen sulfite and/or dithionite at temperatures between 60°C and 120°C, preferably between 80°C and 110°C, under reaction control until no polycondensed melamine-formaldehyde resin is detectable in the reaction mixture,
- Cooling of the reaction mixture and separation of the resulting mixture of melamine and monomeric melamine derivatives,
- Separating the mixture of melamine and monomeric melamine derivatives into methylolmelamines and methylolmelamine sulfonic acids.

2. Process according to claim 1, **characterized in that** the melamine-formaldehyde-resin-containing waste products produced during the manufacture and processing of wood-based panels comprise overstored melamine resin, melamine resin dust, overlay impregnates, decorative impregnates, uncoated or coated wood-based panels, such as HDF panels, and/or laminates, such as thin laminate.

3. Process according to one of the preceding claims, **characterized in that** the melamine-formaldehyde-resin-containing waste products contain cellulose fibres, wood fibres, inorganic abrasion-resistant particles, glass beads, colour pigments, further binders and other additives.

4. Process according to one of the preceding claims, **characterized in that** the melamine-formaldehyde resin contained in the waste products has a molar ratio of melamine/formaldehyde of 1/1.5 to 1 / 2.5, preferably of 1 / 1.6 to 1 / 2.3, more preferably 1 / 1.6 to 1/1.8.

5. Process according to one of the preceding claims, **characterized in that** the melamine-formaldehyde-resin-containing waste products are comminuted to a particle size of between 0.1 and 10 mm, preferably between 0.5 and 3 mm.

6. Process according to one of the preceding claims, **characterized in that** the melamine-formaldehyde-resin-containing waste products are mixed with an aqueous 20 to 70% by weight, preferably 40-60% by weight, alkali metal or alkaline earth metal solution of at least one disulfite, hydrogen sulfite and/or dithionite.

7. Process according to one of the preceding claims, **characterized in that** the melamine-formaldehyde-resin-containing waste products are mixed with at least one sodium disulfite or sodium hydrogen sulfite solution having a pH of between 3.0 and 6, preferably between 3.5 and 5.5.

8. Process according to one of the preceding claims, **characterized in that** the melamine-formaldehyde-resin-containing waste products are mixed with at least one 40-60% by weight, in particular 50% by weight, sodium hydrogen sulfite solution.

9. Process according to one of the preceding claims, **characterized in that** the separation of the foreign substances contained in the reaction mixture is carried out by means of filtration, preferably hot filtration, and/or skimming.

10. Process according to one of the preceding claims, **characterized in that** the reaction control of the degradation of the melamine-formaldehyde resin is carried out using suitable analytical methods, such as thin-layer chromatography, HPLC or gas chromatography.

11. Process according to one of the preceding claims, **characterized in that** by adding ammonia or amines to the mixture of monomeric melamine derivatives, methylolmelamine sulfonic acids are converted into a soluble form and separated from methylolmelamines and melamine.

## Revendications

1. Procédé de décomposition de résine mélamine-formaldéhyde à partir des déchets produits lors de la fabrication et du traitement de panneaux en matériau dérivé du bois
**caractérisé par** les étapes suivantes
- la fourniture de déchets produits lors de la fabrication et du traitement de panneaux en matériau dérivé du bois qui contiennent de la résine mélamine-formaldéhyde polycondensée,
- le cas échéant. - le broyage des déchets contenant de la résine mélamine-formaldéhyde,
- le mélange des déchets contenant de la résine de mélamine-formaldéhyde avec une solution aqueuse à 20 à 70 % en poids, de manière préférée à 40 à 60 % en poids d'au moins un disulfite, hydrogénosulfite et/ou dithionite,
- le chauffage du mélange composé de déchets contenant de la résine mélamine-formaldéhyde et d'au moins un disulfite, hydrogénosulfite et/ou dithionite à des températures entre 60 °C et 120 °C, de manière préférée entre 80 °C et 100 °C, jusqu'à l'obtention d'une solution claire,
- la séparation des substances étrangères de la solution claire,
- le chauffage supplémentaire du mélange de déchets contenant de la résine mélamine-formaldéhyde débarrassé de substances étrangères et d'au moins un disulfite, hydrogénosulfite et/ou dithionite à des températures entre 60 °C et 120 °C, de manière préférée entre 80 °C et 110 °C, sous contrôle de réaction jusqu'à ce qu'aucune résine mélamine-formaldéhyde polycondensée ne soit plus détectable dans le mélange réactionnel, et
- le refroidissement du mélange réactionnel et la séparation du mélange de mélamine et de dérivés de mélamine monomères se formant,
- la séparation du mélange de mélamine et de dérivés de mélamine monomères en mélamine de méthylol et en acides mélaminosulfoniques de méthylol.

2. Procédé selon la revendication 1, **caractérisé en ce que** les déchets contenant de la résine mélamine-formaldéhyde produits lors de la fabrication et du traitement de panneaux en matériau dérivé du bois comprennent de la résine mélamine superposée, de la poussière de résine mélamine, des produits imprégnés overlay, des produits imprégnés décoratifs, des panneaux en matériau dérivé du bois non revêtus ou revêtus, tels que les panneaux HDF, et/ou des stratifiés, tels que le stratifié fin.

3. Procédé selon l'une quelconque des revendications précédentes, **caractérisé en ce que** les déchets contenant de la résine mélamine-formaldéhyde contiennent des fibres de cellulose, des fibres de bois, des particules inorganiques résistantes à l'abrasion, des billes de verre, des pigments de couleur, d'autres liants et d'autres additifs.

4. Procédé selon l'une quelconque des revendications précédentes, **caractérisé en ce que** la résine mélamine-formaldéhyde contenue dans les déchets présente un rapport molaire de mélamine/formaldéhyde de 1/1,5 à 1/2,5, de préférence de 1/1,6 à 1/2,3, de manière particulièrement préférée de 1/1,6 à 1/1,8.

5. Procédé selon l'une quelconque des revendications précédentes, **caractérisé en ce que** les déchets contenant de la résine mélamine-formaldéhyde sont broyés à une taille de particule comprise entre 0,1 et 10 mm, de préférence entre 0,5 et 3 mm.

6. Procédé selon l'une quelconque des revendications précédentes, **caractérisé en ce que** les déchets contenant de la résine de mélamine-formaldéhyde sont mélangés avec une solution alcaline ou alcalino-terreuse aqueuse à 20 à 70 % en poids, de manière préférée à 40 à 60 % en poids, d'au moins un disulfite, hydrogénosulfite et/ou dithionite.

7. Procédé selon l'une quelconque des revendications précédentes, **caractérisé en ce que** les déchets contenant de la résine de mélamine-formaldéhyde sont mélangés avec au moins une solution de disulfite ou d'hydrogénosulfite de sodium avec un pH entre 3,0 et 6,0 de manière préférée entre 3,5 et 5,5.

8. Procédé selon l'une quelconque des revendications précédentes, **caractérisé en ce que** les déchets contenant de la résine de mélamine-formaldéhyde sont mélangés avec au moins une solution d'hydrogénosulfite de sodium à 40 à 60 % en poids, en particulier à 50 % en poids.

9. Procédé selon l'une quelconque des revendications précédentes, **caractérisé en ce que** la séparation des substances étrangères contenues dans le mélange réactionnel s'effectue par filtration, de préférence par filtration à chaud, et/ou par écumage.

10. Procédé selon l'une quelconque des revendications précédentes, **caractérisé en ce que** le contrôle de réaction de la décomposition de la résine mélamine-formaldéhyde est réalisé à l'aide de méthodes analytiques appropriées, telles que la chromatographie en couche mince, la HPLC ou la chromatographie en phase gazeuse.

11. Procédé selon l'une quelconque des revendications précédentes, **caractérisé en ce que**, par l'ajout d'ammoniac ou d'amines au mélange de dérivés de mélamine monomères, des acides mélaminosulfoniques de méthylol sont transformés en une forme soluble et sont séparés des mélamines de méthylol et de la mélamine.
